# EUROPEAN PATENT SPECIFICATION

(11) **EP 2 360 413 B1**
(45) Date of publication and mention of the grant of the patent: **06.06.2012**
(21) Application number: 10425038.6
(22) Date of filing: 16.02.2010
(51) Int. Cl.: F16L 37/56

(54) **Multi-coupling device for multiple quick-coupling connection of several hydraulic, electrical and pneumatic lines, equipped with decompression system**
Mit Dekompressionssystem ausgestattete Multikupplungsvorrichtung zur mehrfachen Schnellkupplungsverbindung verschiedener hydraulischer, elektrischer und pneumatischer Leitungen
Dispositif de multi-couplage pour de multiples connexions à couplage rapide de plusieurs lignes hydrauliques, électriques et pneumatiques, équipé d'un système de décompression

(43) Date of publication of application: 24.08.2011
(73) Proprietor: Faster S.P.A., 20124 Milano (IT)
(72) Inventor: Sorbi, Roberto, 26027 Rivolta D'Adda (IT); Debernardi, Carlo Enrico, 26027 Rivolta D'Adda (IT); Rossetti, Daniele, 26010 Dovera (IT)
(74) Representative: Borsano, Corrado

(56) References cited:
- WO-A1-2007/101516
- US-A1- 2006 130 910

## Description

The present invention relates to a multi-coupling device of the plate type for connecting a plurality of hydraulic, electrical and pneumatic lines by means of quick couplings.

In various industrial fields, the need to simultaneously connect a plurality of lines, whether hydraulic, electrical and/or pneumatic lines, has now been consolidated for a long time. This need is felt in the agricultural field, for example, for connecting buckets, lifters, forklifts and any agricultural equipment to be connected to a tractor, for example; in the construction field, in asphalting or cement machines, in hydraulic hammers and the like; in the transport field for connecting a snow plough, trailers and the like, and so forth.

Therefore, the need to be able to connect several hydraulic, electrical and pneumatic lines is particularly felt, thus saving time, avoiding fluid leakages or air inclusions in the lines during the connection and disconnection steps, and avoiding dangerous connection errors such as, for example, the reversal of two lines.

Some technical solutions meet these requirements, the most well-known and functional solution consisting of a multi-connection plate known on the market with the trade name Multifaster and for some aspects already the subject matter of the Italian Patent IT1271165 and for other aspects of European Patents EP 0 787 905 B1 and EPO 522 493 B2 assigned to the same Applicant, which comprises two connection plates, one of which is connected to an auxiliary device to be connected and therefore it is movable, while the other is generally connected to the vehicle or apparatus to which said auxiliary device is to be connected, and therefore it is fixed.

Another example of a multi-connection device known from the prior art is disclosed by the prior application WO 2007/101516 A1, which discloses a device comprising two plates and a plurality of first and second fluid connections, and means to connect and disconnect the first and the second plates.

Therefore, each of the two plates accommodates a plurality of quick couplings. In particular, the fixed plate is preferably equipped with flat-face, female couplings, while the movable plate is equipped with corresponding flat-face, male couplings. From 1 to 12 hydraulic, electrical and pneumatic lines simultaneously exist on these plates. Each utility generally has one outflow line and one inflow line, whereby for each utility two pairs of couplings are required.

The fixed plate in particular, i.e. the one connected to the source vehicle or machinery releasing energy and/or pressurized fluids, has been the object of specific design attention as its surface has been made so as to be completely flat to allow easy and fast cleaning thereof.

The connection plate of the auxiliary device, the movable one, generally has construction elements such as for example connector pins, fittings to connect hydraulic piping and electrical connectors, positioned so as to protrude from the lower surface of the movable connection plate, while the fixed connection plate assembled on the vehicle or apparatus, as previously mentioned, is provided with holes and seats to introduce said pins and fittings, as well as with electrical connectors accommodated within the body of the fixed plate, which thus has a flat and smooth surface. Thereby, the surface of the flat plate may be easily cleaned when the movable plate of the auxiliary device is connected, the flat plate being also conveniently resealable by means of a protective cover which prevents the plate and the female couplings from getting soiled during the period of non-use.

With regards to connecting and disconnecting the movable plate to/from the fixed plate, this occurs due to a locking handle or lever, easily seizable by the operator, swayable about a fulcrum integral with the main body to which the fixed plate is connected. Said lever is generally handle-shaped and is hinged to two sides of the fixed plate, each of the two sections of the handle hinged with said plate has a guide or eccentric groove capable of accommodating suitable pins provided on the movable plate, so that the action of said eccentric groove or cam on the pins moves the movable plate close to the fixed plate thus facilitating the correct insertion of the couplings and keeping the two plates firmly connected over the entire period of operation, during which time said lever is locked in the lowered position.

As a mechanical safety device, some of the types of multi-coupling plates described heretofore and known from the state of the art have a release button at one of the two hinging points of the handle to the plate, which should be pressed by the operator to release the lever, so as to move it from the operating position in which the lever keeps the plates in a position of mutual coupling, to the release position in which to proceed with uncoupling the two plates. Similarly, in the step of coupling the two plates, the handle is brought to the closing position and the device with the mechanical safety button snaps to its working position in which its locks the handle itself.

As long as the operator does not press the release button, mechanical stop elements, such as for example pawls or bushings, prevent the shifting of the lever and therefore the opening of the multiple connection, i.e. the separation of the two plates.

The plates of this type, available today on the market, cover a vast combination in terms of coupling dimensions and number of lines. Due to this solution, several hydraulic lines may be connected in a single manoeuvre without the risk of reversing them.

However, some drawbacks afflict these multiple plate couplings of known type.

Among these drawbacks, the main one relates to the possibility of connecting and disconnecting the plates when the lines are pressurized, i.e. when there is a pressurized fluid, typically oil but not only, in the hydraulic and/or pneumatic lines. Such a situation is disadvantageous in every circumstance, but especially in the case of a high number of lines and sizes of the couplings exceeding ½".

Therefore, a further drawback left unsolved by the multiple plate coupling systems of the known type consists in that the connection-disconnection load is not independent from the pressure still present in the circuits of the fixed plate and/or movable plate, and independent from the number of lines with residual pressure. Currently, the operation of connecting/disconnecting the two plates may even be impossible when there are high pressures in the circuits. These pressures may remain both in the circuits of the utility and in those of the fixed part.

Moreover, a further drawback left unsolved by the multiple plate coupling systems of the type known from the state of the art is the riskiness of the disconnection operation under pressure. Since the devices of the known type do not have further safety devices other than the above-discussed mechanical safety catch for locking the lever, the operator can proceed to release the lever also when there are high pressures in the lines, which means that due to the pressures, as soon as the couplings are disconnected, the two plates may be suddenly separated at high speed, which entails just as sudden and quick raising of the lever, which may knock and injure the operator himself/herself.

Not least drawback, which afflicts the plates of the known type and related to the possibility of proceeding with the disconnection while having a pressurized fluid in the lines, consists in dispersing the working fluid (generally oil, but not only) in the surrounding environment.

Therefore, it is the primary task of the present invention to suppress or reduce the above-mentioned drawbacks.

Therefore, within the scope of this task, it is the object of the present invention to provide a multi-coupling plate connection system having an improved level of safety in all steps of use and in particular during connection and disconnection operations.

Moreover, it is a further object of the present invention to provide a multi-coupling plate connection system capable of allowing the coupling and uncoupling of the plates in complete safety even when there is a pressurized fluid in the hydraulic and/or pneumatic circuits, in particular also when there is a pressurized fluid both in the circuits of the fixed part and in the circuits of the movable part of the system.

It is a further object of the present invention to provide a multi-coupling plate system equipped with a safety system suitable for discharging the pressures and recovering decompressed and clean oil during the steps of coupling/uncoupling.

This task and these and other objects which will become more apparent below, are achieved by a multi-coupling device comprising a main body connectable to a vehicle or apparatus and supporting a first plate comprising a plurality of semi-couplings, each connected to a hydraulic line and suitable for being connected to corresponding semi-couplings of a second multi-coupling plate for connecting said hydraulic lines to the utility, said device further comprising means to connect and disconnect said first plate to/from said second plate, characterized in that it further comprises a hydraulic system for decompressing said hydraulic lines.

The device according to the present invention is also characterized in that said hydraulic system comprises in turn a hydraulic safety device for locking said lever.

Further features and advantages of the present invention will become more apparent from the following detailed description, provided by way of non-limiting example and illustrated in the accompanying drawings, in which:

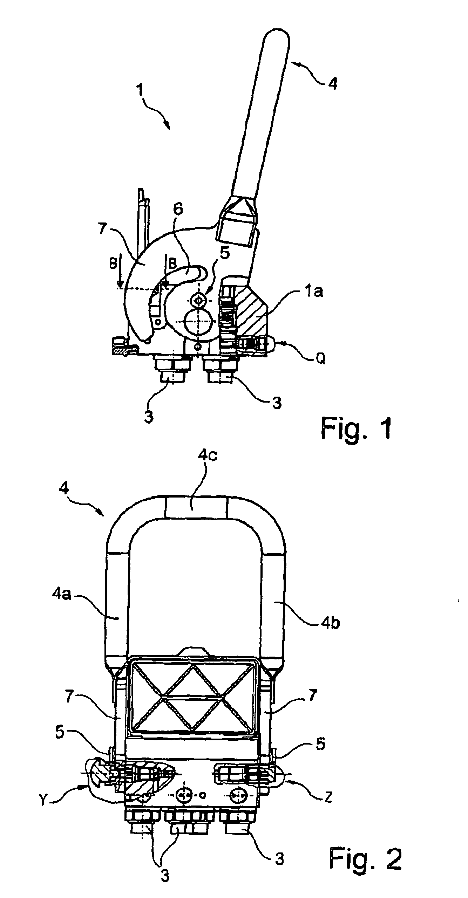

figure 1 shows a side view of the multi-coupling device according to the present invention;

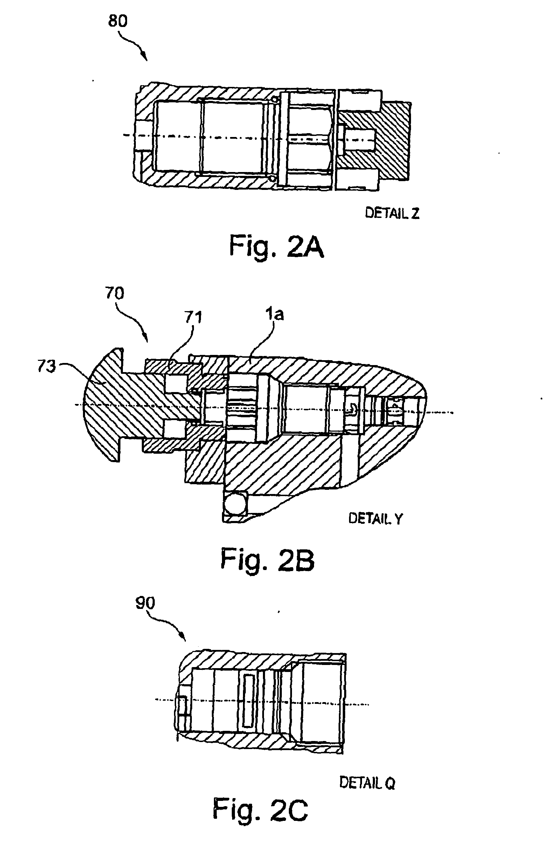

figure 2 shows a front view of the multi-coupling device according to the present invention according to the section with plane C-C denoted in figure 1;
figures 2A, 2B and 2C show enlarged details of peculiarities in figure 2;
figure 3 shows a top view of the multi-coupling device according to the present invention according to the section with plane B-B denoted in figure 1;
figure 4 shows a hydraulic-circuit diagram of the multi-coupling device according to the present invention schematized in a top view;
figure 5 shows a schematic drawing of a non-return valve forming part of the hydraulic circuit in figure 4;
figure 6 shows a schematic drawing of the integrated mechanical safety catch system according to the present invention;
figure 7 shows a schematic drawing of a peculiarity of the hydraulic safety catch device of the multi-coupling device according to the present invention.

According to a preferred embodiment of the present invention illustrated in the mentioned figures by way of a non-limiting example, the multi-coupling device **1** according to the present invention comprises a main body **1a** supporting a plate element **2** in turn supporting a plurality of semi-couplings **3**, preferably female semi-couplings. According to the teaching from the state of the art, a second plate (not shown in the figures) also supporting a plurality of semi-couplings (in this case of male type) may be coupled to the first plate **2,** so that the semi-couplings supported by the two plates may embody the connection of just as many hydraulic lines.

The main body **1a** of said device is fixedly connectable to a vehicle or apparatus, and the second movable plate is connected to a utility to be connected to such a vehicle or apparatus. The multi-coupling device **1** also advantageously comprises one handle **4,** which is U-shaped in the example illustrated in the accompanying drawings, hinged to both of the sides of said main body **1a.** In greater detail, said handle **4** has two substantially straight, levered sections **4a** and **4b** each hinged in a fulcrum **5** at two opposite sides of said plate **2,** and they are joined to each other by a joining section **4c,** particularly suitable for being seized by the user. Said sections **4a** and **4b** of said handle **4** are hinged to said main body **1a** and each has a plate-like extension **7** on which an eccentric groove **6** is obtained. During the coupling step of the fixed plate **2** to said second movable plate, each of said eccentric grooves **6** receives a pin (not shown in the accompanying drawings) provided on said second movable plate, and has a shape such that once the pins of the second plate are positioned within the eccentric grooves **6** of lever **4** when the operator lowers the lever, reciprocal nearing is obtained and the two plates are closed one against the other, and therefore the male semi-couplings are coupled within the corresponding female semi-couplings.

When the locking handle **4** is lowered to the horizontal position by the operator, the plates supporting the semi-couplings interpenetrate thus embodying the connection of the hydraulic lines connected thereto. When the plates are correctly connected, the operator can bring the locking lever **4** to a substantially horizontal position in which mechanical safety catch means snap, thus firmly keeping the lever itself in the plate locking and closing position.

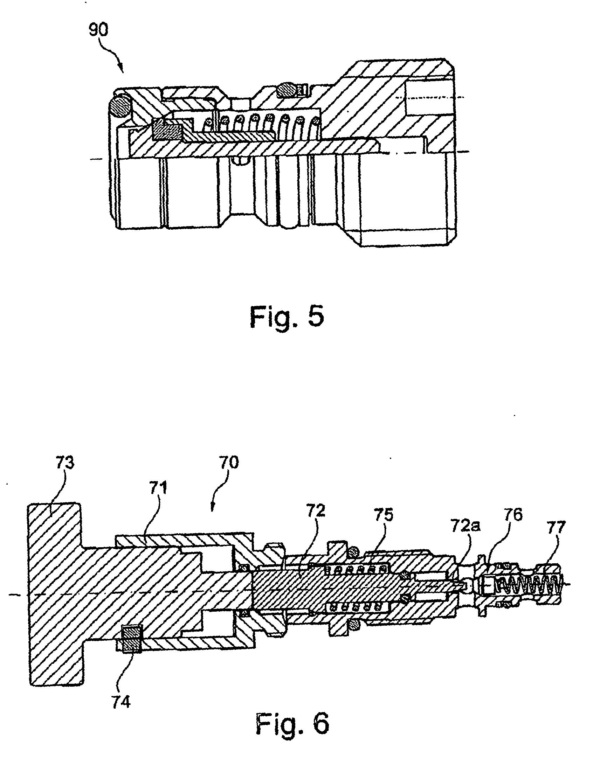

In the embodiment illustrated in the accompanying drawings and in particular in figure 6, said mechanical safety catch means comprise a mechanical safety catch pawl **71** integral with the plate-like portion **7a** of the lever section **4a** of said handle **4** being substantially hollow, cylindrical in shape and within which the safety button **73** is able to axially slide and rotate about its symmetry axis. Said safety button **73** is suitable to be operated by the user, whereby it externally protrudes from the side of the main body **1a.** Again in greater detail, the mechanical safety catch means according to the embodiment shown in the accompanying drawings, provide that said safety button **73** is able to axially shift when pressed by the user, thus exerting in turn a bias on the mechanical stop and decompression shaft **72,** which is also axially shiftable with respect to the body of the multi-coupling device, and which therefore, with reference to figure 6, shifts to the right with respect to the pawl **71.** Hence, the stop shaft **72** may retract within the main body **1a** thus pressing the helical return spring **75** and releasing handle **4.** Indeed, in the stop position, the shaft **72** interferes with the walls of the internal cavity of said pawl **71** so as to prevent the lever and thus the plates from involuntarily opening, serving its function of mechanical safety catch.

The pressing action of the safety button **73** by the user thus releases the mechanical stop shaft **72,** which forms part of the mechanical safety catch means.

The multi-coupling plate according to the present invention further comprises hydraulic safety catch means.

In particular, again with reference to figure 6, when the user presses the safety button **73,** it is free to run an axial travel limited by a guide pin **74,** provided integrally with said pawl **71** and suitable to slide within a specific groove (not shown in the figures) obtained on the external surface of the body of said safety button **73.** When the button is pressed by the operator, the mechanical safety catch stop **72** is pushed and forced to return within the body of the multi-coupling plate, so that the plate is released. However, another pin is conveniently provided on the opposite side of the plate, suitable to interfere with lever **4,** in particular with the plate-like extension **7b** of the lever section **4b** of handle **4.** Said pin forms part of said hydraulic safety catch means.

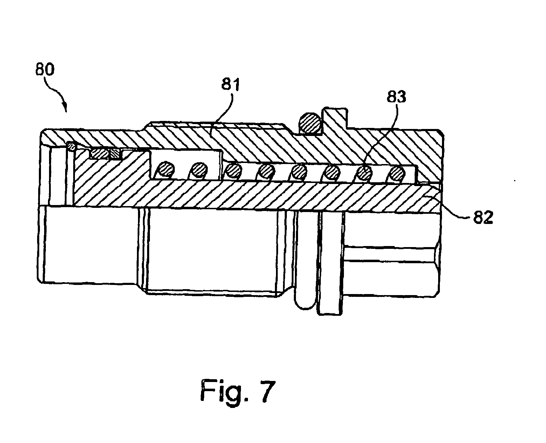

According to the schematization in figure 7, said hydraulic safety catch means **80** comprise a safety catch body **81** integral with the body of said plate which accommodates a pin **82** therein. Said pin **82** is slidingly associated with said safety catch body **81,** and as shown in figure 7, is kept within the safety catch body **81** by the bias of the releasing spring **83.**

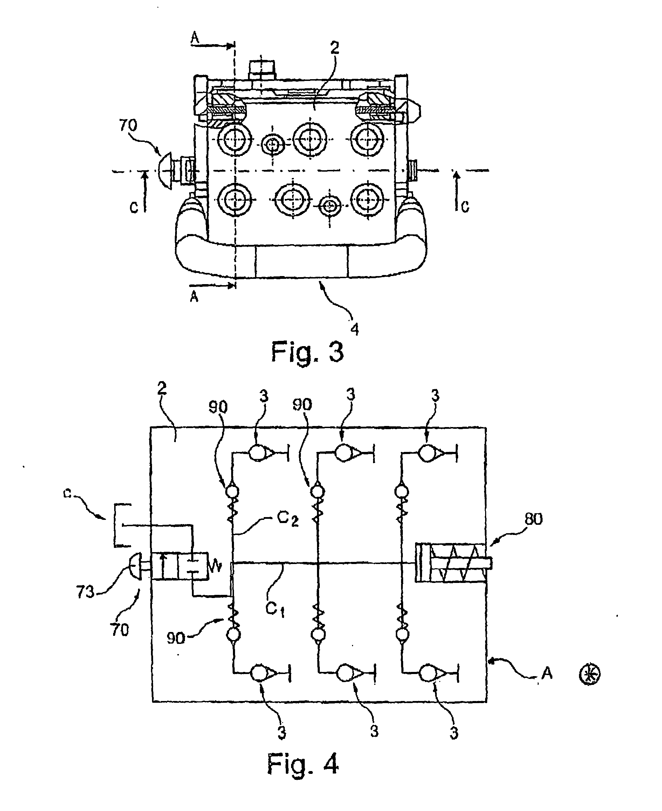

Said mechanical and hydraulic safety catch means are both connected to a hydraulic circuit, schematically illustrated in figure 4 and generally indicated by letter **A.** Said hydraulic circuit connects each semi-coupling (indicated by numeral **3)** to a bleed line c, a non-return valve **90** being provided on every branch of the circuit connected to the couplings. The bleed line c is also connected to said mechanical safety catch means 70 and to said hydraulic safety catch means 80.

With specific reference to figure 4, the hydraulic circuit of the multi-coupling device according to the present invention allows the pressure to be discharged from the lines upon opening the hydraulic safety catch. The interrelated operation of the mechanical and hydraulic safety catch devices connected to the hydraulic circuit will be disclosed in greater detail below. Here, it is worth noting how the hydraulic circuit A provides for a bleed line **c** to collect the fluid (normally oil) from the couplings, therefore pressurized fluid is discharged from each hydraulic line, both of the energy source apparatus and the utility. In particular, by means of a branch c₂ on which said fluid shut-off valve **90** is provided, each semi-coupling **3** is connected to the main branch **c₁** connecting said mechanical safety catch means **70** to said hydraulic safety catch means **80.** An embodiment of a fluid shut-off valve is shown in figure 5, and generally indicated by reference numeral **90.**

Returning to figure 6, as previously mentioned, the safety button **73** may shift and push the pin or mechanical safety catch stop **72** until it is partially released from handle **4,** however only due to a subsequent rotation of said button **73** by the operator, it may further advance in the axial direction towards the bottom of the pawl **71,** being guided by the fixed guide pin **74** on pawl **71** which interacts with a convenient spiral groove section obtained on the external surface of the button itself. This further shifting of button **73** involves analogous further shifting of the mechanical safety catch stop **72** to the right with the mechanical safety catch **72** being completely released from handle **4** in the example in figure 6, which prevails over the bias exerted by the return spring **75.** At the opposite end with respect to the end adapted to strike against button **73,** said mechanical safety catch stop **72** has a tapered conical section **72a** adapted to strike a decompression valve **76,** kept in the closing position by a helical spring **77.**

The operation of the mechanical and hydraulic safety catch means **70, 80** as well as of the hydraulic circuit **A** of the multi-coupling device according to the present invention will now be described in greater detail.

With the plates being coupled, when the operator only applies pressure on button **73,** it may shift without snapping the mechanical safety catch consisting of pin **72.** Moreover, handle **4** may not yet be lifted as the hydraulic safety catch means **80** on the opposite side of the plate, in particular the pin **82** of the hydraulic safety catch, still prevents handle **4** from moving. If the operator rotates the button **73** once it has been pressed by the operator himself/herself, further shifting the mechanical safety catch stop **72** completes releasing the aforesaid mechanical safety catch and causes valve **76** to open, and the pressure in the hydraulic circuit **A** to be subsequently discharged. Indeed, valve **76** is placed to close the main branch **c₁** of the hydraulic circuit **A,** where all branches **c₂** connected to the couplings **a** converge. Hence, when the operator presses and rotates the button **73,** the valve **76** opens to allow the bleeding, through line **c,** of the pressurized fluid in the lines (generally oil).

Therefore, the safety button **73** substantially comprises a mechanical stop and decompression shaft **72** which is movable between a first stopped position, corresponding to the condition of button **73** not pressed, in which said mechanical stop **72** prevents the opening movement of the connecting and disconnecting means **4,** a second position that is also a mechanical stop, corresponding to the condition of pressed button, in which said mechanical stop **72** interferes with said connecting and disconnecting means **4,** and a third decompression and mechanical non-interference position, corresponding to the condition of pressed and rotated button **73,** in which said mechanical stop shaft **72** opens a valve **76** for decompressing the hydraulic circuit **A.**

As previously mentioned, the hydraulic safety catch means **80** are connected to the hydraulic circuit, as shown in the diagram in figure 4. In the detail in figure 7, the hydraulic safety catch **80** is connected on the left to the hydraulic circuit **A,** in particular to the main line **c₁.** When valve **76** is opened due to action on button **73,** as there is a pressurized fluid, the pressure within the circuit **A** is bled from line c, from the hydraulic lines to the vehicle or apparatus, therefore the bias will be reduced which is exerted by the fluid in section **c₁** on the pin **82** of the hydraulic safety catch until the bias induced on the pin **82** of the hydraulic safety catch is insufficient to counter the bias of spring **83** and the pin retracts within the main body of the device, biased by the spring, thus releasing the handle **4.** By conveniently sizing the spring **83,** the opening of pin **82** may be determined only when the pressure in circuit **A** drops below a predetermined threshold value.

Therefore, the multi-coupling device according to the present invention allows the operator to connect/disconnect the semi-couplings of the two plates even when there is pressurized fluid in the hydraulic lines. In particular, the multi-coupling device according to the present invention allows the couplings of the various lines to be connected/disconnected even when there is fluid at maximum operating pressure in the lines, and regardless of that the pressurized fluid is in the lines of the fixed part, in those of the movable part, or in both.

Indeed, it has been disclosed how the multi-connection device according to the present invention comprises a hydraulic circuit which integrates a decompression and recovery system for the fluid, comprising an outlet valve and a bleed line, and connected to hydraulic and mechanical safety catch means. The decompression system according to the above disclosure allows the pressure within the lines to be abated, and therefore the coupling and uncoupling loads of the couplings to be abated.

A further primary advantage achieved by the multi-coupling device according to the present invention consists in greater safety. Indeed, according to the above disclosure, lever **4** may be raised to open the multiple connection only once the pressure and the subsequent rotation of the safety button **73** by the user have abated the fluid pressure in the lines, due to the fluid decompression means. This solves the drawback which afflicts the systems of the type known from the state of the art, which may be uncoupled even when the lines are pressurized, and for which accidentally pressing the release button of the mechanical safety catch could have led to the violent uncoupling of the two plates due to the pressure in the lines, with the subsequent risk that the lever violently hits the operator and the fluid (generally oil) is dispersed into the surrounding environment.

Hence, a further advantage obtained by the multi-coupling device according to the present invention is that to succeed in recovering the decompressed clean oil during the coupling/uncoupling steps, which oil may be re-introduced into the hydraulic circuit of the machine or vehicle to which the multi-coupling device according to the present invention is connected.

Again, as previously mentioned, the multi-coupling device according to the present invention is equipped with a hydraulic circuit comprising a non-return valve or check valve for every coupling, so that each hydraulic line may be connected to the bleed line without hydraulic short-circuiting problems occurring between the lines. This contrivance makes the decompression system highly simple and reliable.

Several modifications may be made by the person skilled in the art without departing from the scope of protection of the present invention.

Therefore, the scope of protection of the claims should not be limited by the disclosures or preferred embodiments shown in the description by way of example, but rather the claims should comprise all features of patentable novelty inferable from the present invention, including all features which would be treated as equivalent by the field technician.

## Claims

1. A multi-coupling device (1) comprising a main body (1 a) connectable to a vehicle or apparatus and supporting a first plate (2) comprising a plurality of semi-couplings (3), each connected to a hydraulic line and adapted to be connected to corresponding semi-couplings of a second multi-coupling plate which are in turn connected to hydraulic lines for connecting said hydraulic lines to one another, said device further comprising means (4) to connect and disconnect said first plate (2) to/from said second plate, **characterized in that** it further comprises means for decompressing said lines during the step of connecting and disconnecting said first plate (2) to/from said second plate, and **in that** said means for decompressing the hydraulic lines comprise at least one hydraulic circuit (A), in turn comprising a bleed line (c), and connected to said semi-couplings (3) of said first plate (2) and to safety catch means (70, 80) adapted to selectively allow or prevent the opening and closing of the plate connection when there is pressurized fluid in the hydraulic lines.

2. A multi-coupling device (1) according to the preceding claim, **characterized in that** said safety catch means comprise mechanical safety catch means (70) which interact with said connecting and disconnecting means (4, 5, 6).

3. A multi-coupling device (1) according to the preceding claim, **characterized in that** said safety means further comprise hydraulic safety catch means (80) which interact with said connecting and disconnecting means (4, 5, 6).

4. A multi-coupling device (1) according to the preceding claim, **characterized in that** said mechanical safety catch means (70) and said hydraulic safety catch means (80) are in turn connected to said hydraulic circuit (A) and reciprocally interacting.

5. A multi-coupling device (1) according to the preceding claim, **characterized in that** said hydraulic safety catch means (80) prevent the plates from disconnecting so long as the fluid in the lines and therefore in the hydraulic circuit (A) exceeds a predetermined threshold value.

6. A multi-coupling device (1) according to one or more of the preceding claims, **characterized in that** said mechanical safety catch means (70) may be manually operated by the user.

7. A multi-coupling device (1) according to the preceding claim, **characterized in that** said mechanical safety catch means (70) comprise a safety button (73) adapted to be first pressed and then rotated by the user.

8. A multi-coupling device (1) according to the preceding claim, **characterized in that** said safety button (73) comprises a mechanical stop and decompression shaft (72) which is movable between a first stopped position, corresponding to the condition of button (73) not pressed, in which said mechanical stop (72) prevents the opening movement of the connecting and disconnecting means (4, 5, 6), a second position which is also a mechanical stop, corresponding to the condition of pressed button, in which said mechanical stop (72) interferes with said connecting and disconnecting means (4, 5, 6), and a third decompression and mechanical release position, corresponding to the condition of pressed and rotated button (73), in which said mechanical stop shaft (72) opens a valve (76) for decompressing the hydraulic circuit (A).

9. A multi-coupling device (1) according to the preceding claim, **characterized in that** said hydraulic safety catch means (80) comprise a safety catch body (81 ), which is integral with the main body (1a) of said device, which accommodates a pin (82) therein which is slidingly associated therewith and movable between a first stopped position in which said pin protrudes from said safety catch body (81) and interferes with said connecting and disconnecting means (4, 5, 6), and a second release position in which said pin is accommodated within said safety catch body (81) and does not interfere with said connecting and disconnecting means (4, 5, 6).

10. A multi-coupling device (1) according to the preceding claim, **characterized in that** said pin (82) is movable between the two stopped and released positions according to the value of the pressure within the hydraulic circuit (A).

## Patentansprüche

1. Multikupplungsvorrichtung (1), welche einen Grundkörper (1a) umfasst, der mit einem Fahrzeug oder einem Gerät verbunden werden kann und der eine erste Platte (2) trägt, welche eine gewisse Anzahl von einseitigen Anschlussbauteilen (3) umfasst, von denen jedes an eine Hydraulikleitung angeschlossen ist und so ausgelegt ist, dass es mit entsprechenden einseitigen Anschlussbauteilen einer zweiten Multikupplungsplatte verbunden werden kann, an welche wiederum Hydraulikleitungen zu dem Zweck angeschlossen werden können, damit die genannten Hydraulikleitungen miteinander verbunden werden, wobei die genannte Vorrichtung außerdem Mittel (4) umfasst, die dazu dienen, die genannte erste Platte (2) an mit der genannten zweiten Platte zu verbinden und beide wieder zu trennen, **dadurch gekennzeichnet, dass** diese Multikupplungsvorrichtung außerdem Mittel umfasst, die dazu dienen, die genannten Leitungen während der Schritte des Verbindens der genannten ersten Platte (2) mit der genannten zweiten Platte und des Trennens dieser beiden druckfrei zu machen, ferner dadurch, dass die genannten Mittel zur Druckentlastung der Hydraulikleitungen mindestens einen Hydraulikkreis (A) umfassen, welcher seinerseits eine Entlüftungsleitung (c) umfasst und welcher an die genannten einseitigen Anschlussbauteile (3) der genannten ersten Platte (2) und an Verriegelungsmittel (70, 80) angeschlossen ist, welche so ausgelegt sind, dass sie auf selektive Weise das Öffnen und Schließen der über die Platten zustande gekommenen Verbindung ermöglichen oder verhindern, während sich in den Hydraulikleitung ein unter Druck stehendes Medium befindet.

2. Multikupplungsvorrichtung (1) nach dem vorangehenden Anspruch, **dadurch gekennzeichnet, dass** die genannten Verriegelungsmittel mechanische Verriegelungsmittel (70) umfassen, welche sich mit den genannten Mitteln zum Verbinden und Trennen (4, 5, 6) in Wechselwirkung befinden.

3. Multikupplungsvorrichtung (1) nach dem vorangehenden Anspruch, **dadurch gekennzeichnet, dass** die genannten Verriegelungsmittel hydraulische Verriegelungsmittel (80) umfassen, welche sich mit den genannten Mitteln zum Verbinden und Trennen (4, 5, 6) in Wechselwirkung befinden.

4. Multikupplungsvorrichtung (1) nach dem vorangehenden Anspruch, **dadurch gekennzeichnet, dass** die genannten mechanischen Verriegelungsmittel (70) und die genannten hydraulischen Verriegelungsmittel (80) ihrerseits an den genannten Hydraulikkreis (A) angeschlossen sind und sich untereinander in Wechselwirkung befinden.

5. Multikupplungsvorrichtung (1) nach dem vorangehenden Anspruch, **dadurch gekennzeichnet, dass** die genannten hydraulischen Verriegelungsmittel (80) verhindern, dass eine Trennung der Platten erfolgt, während das Medium in den Leitungen und folglich im Hydraulikkreis (A) einen vorbestimmten Schwellenwert überschreitet.

6. Multikupplungsvorrichtung (1) nach einem oder mehreren der vorangehenden Ansprüche, **dadurch gekennzeichnet, dass** die genannten mechanischen Verriegelungsmittel (70) vom Benutzer manuell betätigt werden können.

7. Multikupplungsvorrichtung (1) nach dem vorangehenden Anspruch, **dadurch gekennzeichnet, dass** die genannten mechanischen Verriegelungsmittel (70) einen Sicherheitsknopf (73) umfassen, der so ausgelegt ist, dass er vom Benutzer zuerst niedergedrückt und dann gedreht wird.

8. Multikupplungsvorrichtung (1) nach dem vorangehenden Anspruch, **dadurch gekennzeichnet, dass** der genannte Sicherheitsknopf (73) eine mechanische Sperr- und Druckentlastungswelle (72) umfasst, welche bewegt werden kann zwischen einer ersten Sperr-Stellung, welche dem nicht gedrückten Zustand des Knopfes (73) entspricht, in welchem die genannte mechanische Sperrvorrichtung (72) die Öffnungsbewegung der Verbindungs- und Trennmittel (4, 5, 6) verhindert, einer zweiten Stellung, welche auch eine mechanische Sperre ist und dem Zustand bei gedrücktem Knopf entspricht, in welchem die genannte mechanische Sperrvorrichtung (72) in die genannten Verbindungs- und Trennmittel (4, 5, 6) eingreift, und einer dritten Stellung für die Druckentlastung und die mechanische Freigabe, welche dem Zustand des gedrückten und gedrehten Knopfes (73) entspricht, bei welchem die genannte mechanische Sperrwelle (72) ein Ventil (76) zur Druckentlastung des Hydraulikkreises (A) öffnet.

9. Multikupplungsvorrichtung (1) nach dem vorangehenden Anspruch, **dadurch gekennzeichnet, dass** die genannten hydraulischen Verriegelungsmittel (80) einen Verriegelungskörper (81) umfassen, welcher fester Bestandteil des Grundkörpers (1a) der genannten Vorrichtung ist und in welchem ein Stift (82) untergebracht ist, welcher auf gleitende Weise mit diesem verbunden ist und bewegt werden kann zwischen einer ersten gesperrten Stellung, in welcher der genannte Stift aus dem genannten Verriegelungskörper (81) heraustritt und in die genannten Verbindungs- und Trennmittel (4, 5, 6) eingreift, und einer zweiten Freigabestellung, in welcher der genannte Stift sich in dem genannten Verriegelungskörper (81) befindet und nicht in die genannten Verbindungs- und Trennmittel (4, 5, 6) eingreift.

10. Multikupplungsvorrichtung (1) nach dem vorangehenden Anspruch, **dadurch gekennzeichnet, dass** der genannte Stift (83) je nach dem Wert des im Hydraulikkreis (A) herrschenden Drucks sich zwischen zwei Stellungen, nämlich der Sperr-Stellung und der Freigabestellung, bewegen lässt.

## Revendications

1. Dispositif de multi-couplage (1) comprenant un corps principal (1a) pouvant être connecté à un véhicule ou appareil et supportant une première plaque (2) comprenant une pluralité de semi-couplages (3) chacun connecté à une conduite hydraulique et apte à être connectés à des semi-couplages correspondants d'une deuxième plaque de multi-couplage qui sont connectés à leur tour à des conduites hydrauliques pour connecter lesdites conduites hydrauliques les unes aux autres, ledit dispositif comprenant en outre des moyens (4) pour connecter et déconnecter ladite première plaque (2) à/de ladite deuxième plaque, **caractérisé en ce qu'**il comprend en outre des moyens pour décompresser lesdites conduites durant l'étape de connection et de déconnection de ladite première plaque (2) à/de ladite deuxième plaque, et **en ce que** lesdits moyens pour décompresser les conduites hydrauliques comprennent au moins un circuit hydraulique (A), comprenant à son tour une conduite de purge (c), et connectés auxdits semi-couplages (3) de ladite première plaque (2) et à des moyens de serrure de sûreté (70, 80) aptes à permettre ou prévenir sélectivement l'ouverture et la fermeture de la connection des plaques lorsqu' il y a du fluide sous pression dans les conduites hydrauliques.

2. Dispositif de multi-couplage (1) selon la revendication précédente, **caractérisé en ce que** lesdits moyens de serrure de sûreté comprennent des moyens de serrure de sûreté mécaniques (70) qui interragissent avec lesdits moyens de connection et de déconnection (4, 5, 6).

3. Dispositif de multi-couplage selon la revendication précédente, **caractérisé en ce que** lesdits moyens de sûreté comprennent en outre des moyens de serrure de sûreté hydrauliques (80) qui interagissent avec lesdits moyens de connection et de déconnection (4, 5, 6).

4. Dispositif de multi-couplage (1) selon la revendication précédente, **caractérisé en ce que** lesdits moyens de serrure de sûreté mécaniques (70) et lesdits moyens de serrure de sûreté hydrauliques (80) sont à leur tour connectés audit circuit hydraulique (A) et sont en interaction réciproque.

5. Dispositif de multi-couplage (1) selon la revendication précédente, **caractérisé en ce que** lesdits moyens de serrure de sûreté hydrauliques (80) empêchent la déconnection des plaques aussi longtemps que le fluide dans les conduites, et de ce fait, dans le circuit hydraulique (A) dépasse une valeur de seuil prédéterminée.

6. Dispositif de multi-couplage (1) selon l'une ou plusieurs des revendications précédentes, **caractérisé en ce que** lesdits moyens de serrure de sûreté mécaniques (70) peuvent être actionnés manuellement par l'utilisateur.

7. Dispositif de multi-couplage (1) selon la revendication précédente, **caractérisé en ce que** lesdits moyens de serrure de sûreté mécaniques (70) comprennent un bouton de sécurité (73) sur lequel l'utilisateur appuie d'abord et le fait tourner ensuite.

8. Dispositif de multi-couplage (1) selon la revendication précédente, **caractérisé en ce que** ledit bouton de sécurité (73) comprend un arbre d'arrêt et de décompression mécanique (72) qui est déplaçable entre une première position arrêtée, correspondant à l'état du bouton (73) non enfoncé, où ledit arrêt mécanique (72) empêche le mouvement d'ouverture du moyen de connection et de déconnection (4, 5, 6), une deuxième position qui est également un arrêt mécanique, correspondant à l'état du bouton enfoncé, dans lequel ledit arrêt mécanique (72) interfère avec lesdits moyens de connection et de déconnection (4, 5, 6), et une troisième position de décompression et de relâchement mécanique, correspondant à l'état du bouton enfoncé et tourné (73), dans lequel ledit arbre d'arrêt mécanique (72) ouvre une vanne (76) afin de décompresser le circuit hydraulique (A).

9. Dispositif de multi-couplage (1) selon la revendication précédente, **caractérisé en ce que** lesdits moyens de serrure de sûreté hydrauliques (80) comprennent un corps de serrure de sûreté (81) qui est intégral avec le corps principal (1a) dudit dispositif, qui reçoit un axe (82) dans celui-ci qui est associé d'une manière coulissante à celui-ci et qui est déplaçable entre une première position arrêtée dans laquelle l'axe fait saillie du corps de serrure de sûreté (81) et interfère avec lesdits moyens de connection et de déconnection (4, 5, 6), et une deuxième position de relâchement dans laquelle ledit axe est reçu dans ledit corps de serrure de sûreté (81) et n'interfère pas avec lesdits moyens de connection et de déconnection (4, 5, 6).

10. Dispositif de multi-couplage (1) selon la revendication précédente, **caractérisé en ce que** ledit axe (82) est déplaçable entre les deux positions arrêtée et relâchée en accord avec la valeur de la pression dans le circuit hydraulique (A).
